# EUROPÄISCHE PATENTANMELDUNG

(11) **EP 2 608 159 A1**
(43) Veröffentlichungstag der Anmeldung: **26.06.2013**
(21) Anmeldenummer: 12450054.7
(22) Anmeldetag: 20.12.2012
(51) Int. Cl.: G07C 9/00, H04B 13/00, G06K 19/077, G06K 7/10, B60R 25/20

(54) **Zutrittskontrollvorrichtung mit kapazitiven Datenübertragungsmodul, das einen RFID-Mikrochip oder einen Rundfunkempfangs-Mikrochip umfasst**

(30) Priorität: 22.12.2011 AT 18732011
(71) Anmelder: EVVA Sicherheitstechnologie GmbH, 1120 Wien (AT)
(72) Erfinder: Arthaber, Holger, 1060 Wien (AT); Psaier, Stefan, 1050 Wien (AT)
(74) Vertreter: Haffner und Keschmann Patentanwälte KG

(57) **Zusammenfassung**

Bei einer Zutrittskontrollvorrichtung umfassend wenigstens eine schließtechnische Komponente mit einer Sende-/Empfangseinrichtung, um eine Datenübermittlung zwischen der schließtechnischen Komponente und einer weiteren schließtechnischen Komponente zu ermöglichen, wobei die Sende-/Empfangseinrichtung ein wenigstens eine Koppelelektrode aufweisendes kapazitives Datenübertragungsmodul aufweist, sodass die Datenübermittlung über eine kapazitive Kopplung zwischen der schließtechnischen Komponente und der weiteren schließtechnischen Komponente erfolgen kann, umfasst das kapazitive Datenübertragungsmodul einen für die induktive Datenübertragung ausgebildeten RFID-Datenübertragungs-Mikrochip oder einen Rundfunkempfangs-Mikrochip, an dessen Antennenanschluss die wenigstens eine Koppelelektrode angeschlossen ist.

## Beschreibung

Die Erfindung betrifft eine Zutrittskontrollvorrichtung umfassend wenigstens eine schließtechnische Komponente mit einer Sende-/Empfangseinrichtung, um eine Datenübermittlung zwischen der schließtechnischen Komponente und einer weiteren schließtechnischen Komponente zu ermöglichen, wobei die Sende-/Empfangseinrichtung ein wenigstens eine Koppelelektrode aufweisendes kapazitives Datenübertragungsmodul aufweist, sodass die Datenübermittlung über eine kapazitive Kopplung zwischen der schließtechnischen Komponente und der weiteren schließtechnischen Komponente erfolgen kann.

Unter Zutrittskontrolivorrichtungen im Sinne der Erfindung sind beispielsweise solche Vorrichtungen zu verstehen, mit denen ein Verfahren zur Zutrittskontrolle insbesondere in Gebäuden durchgeführt werden kann, bei dem eine uni- oder bidirektionale Datenübermittlung zwischen einem elektronischen Schlüssel und einer Schließeinrichtung bzw. einem Schloss stattfindet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung ein Sperrglied zum wahlweisen Freigeben oder Sperren des Zutritts angesteuert wird.

Vorrichtungen dieser Art sind beispielsweise aus den Schriften WO 2007/128009 A1, EP 1168678 A1 und WO 00/15931 A1 bekannt geworden. Der Vorteil der kapazitiven Datenübertragung liegt darin, dass die Datenübertragung zwischen dem elektronischen Schlüssel und der Schließeinrichtung nicht mit einfachen Mitteln abgehört oder abgefangen werden kann. Die kapazitive Datenübertragung funktioniert so, dass der elektronische Schlüssel ein kapazitives Nahfeld erzeugt, über welches die zu übertragenden Daten ausgesendet werden. Das kapazitive Nahfeld wird hierbei an die den Schlüssel tragende Person eingekoppelt und über die Person weitertransportiert. Weiters weist die Empfangseinheit der Schließeinrichtung wenigstens eine kapazitive Koppelfläche auf, sodass sich bei Berührung der Zutrittskontrollvorrichtung oder bei Annäherung an die Schließeinrichtung durch die Person ein Wechselstromkreis schließt und ein elektrischer Fluss durch die Schließeinrichtung entsteht, der von der Empfangseinheit erfasst werden kann. Die kapazitive Datenübertragung hat zur Folge, dass der elektronische Schlüssel selbst nicht in unmittelbare Nähe zum Empfänger der Schließeinrichtung gebracht werden muss und es bedarf keiner benutzergesteuerten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl. Die zu übertragenden Daten können hierbei beispielsweise auf eine vom elektronischen Schlüssel generierte Trägerfrequenz aufmoduliert werden.

Die Bedienerfreundlichkeit der Zutrittskontrolle wird dadurch wesentlich erhöht und es wird überdies sichergestellt, dass eine Datenübertragung lediglich dann erfolgt, wenn die den Schlüssel tragende Person sich der Schließeinrichtung nähert oder diese berührt, sodass Manipulationsmöglichkeiten durch Dritte nahezu ausgeschlossen sind. Weiters ist durch den Umstand, dass ein niedrig energetisches, kapazitives Nahfeld zur Anwendung gelangt, der Energieverbrauch des Zutrittskontrollsystems äußerst gering, und insbesondere der Stromverbrauch des elektronischen Schlüssels.

Unter elektronischen Schlüsseln werden nachfolgend unterschiedliche Ausbildungen von Identmedien verstanden, die einen elektronischen Code bzw. Identifikationsdaten gespeichert haben, z.B. in der Form von Karten, Schlüsselanhängern und Kombinationen aus mechanischen und elektronischen Schlüsseln.

Nachteilig bei der kapazitiven Datenübertragung ist, dass keine standardisierten Bauteile für den Einsatz in Zutrittskontrollvorrichtungen zur Verfügung stehen, mit denen die kapazitive Datenübertragung in einfacher und kostengünstiger Weise realisiert werden kann. Dies ist insbesondere damit zu erklären, dass die Nutzung von kapazitiven Datenübertragungssystemen bei schließtechnischen Einrichtungen bisher nur in sehr begrenztem Ausmaß kommerziell verfügbar gemacht wurde, sodass sich die Entwicklung von Großserienmodellen von Datenübertragungsmodulen bisher nicht gelohnt hat.

Der Erfindung liegt daher die Aufgabe zugrunde, eine Möglichkeit zu finden, mit der die kapazitive Datenübertragung bei schließtechnischen Komponenten in einfacher und kostengünstiger Weise baulich realisiert werden kann, wobei es insbesondere wünschenswert wäre, wenn möglichst kleinbauende bzw. miniaturisierte Datenübertragungsmodule zur Verfügung stehen würden.

Zur Lösung dieser Aufgabe sieht die Erfindung bei einer Zutrittskontrollvorrichtung der eingangs genannten Art vor, dass das kapazitive Datenübertragungsmodul einen für die induktive Datenübertragung ausgebildeten RFID-Datenübertragungs-Mikrochip oder einen Rundfunkempfangs-Mikrochip umfasst, an dessen Antennenanschluss die wenigstens eine Koppelelektrode angeschlossen ist.

Es wurde somit überraschenderweise gefunden, dass Mikrochips, die nicht für die Verwendung bei der kapazitiven Datenübertragung konzipiert wurden, sich für den Einsatz als Empfangs- und/oder Sendebaustein im kapazitiv arbeitenden Datenübertragungsmodul einer Zutrittskontrollvorrichtung eignen. Dabei ist es von besonderem Vorteil, dass die erfindungsgemäß zum Einsatz gelangenden RFID-Mikrochips und Rundfunk-Empfangschips in überaus großen Mengen zu sehr geringen Kosten allgemein verfügbar sind. Die mit diesen Mikrochips erzielte Miniaturisierung des Datenübertragungsmoduls erlaubt außerdem den Einbau in Identmedien und Schlösser, wie z.B. Schließzylinder, Beschläge, Betätigungselemente, wie z.B. Knäufe, Drücker und dgl., wobei insbesondere auch eine Nachrüstung bestehender schließtechnischer Einrichtungen ohne weiteres möglich ist.

Bei der kapazitiven Datenübertragung fungiert wenigstens eine Koppelelektrode oder eine Koppelkapazität als Antenne. Im Rahmen der Erfindung wird die wenigstens eine Koppelelektrode oder eine Koppelkapazität an die für die Empfangs- bzw. Sendespule vorgesehenen Anschlüsse des RFID-Mikrochips oder an die für die Dipolantenne vorgesehenen Anschlüsse des Rundfunkempfangs-Mikrochips angeschlossen. In bestimmten Fällen kann es dabei erforderlich sein, dass die Koppelelektrode über ein Anpassnetzwerk für die Impedanzanpassung an den Mikrochip angeschlossen ist.

Bei den erfindungsgemäß eingesetzten RFID-Mikrochips handelt es sich um solche, die als Lese-Schreib-Interface für die induktive Datenübertragung konzipiert sind. Solche RFID-Mikrochips werden millionenfach in Leseeinrichtungen für RFID-Transponder in Anwendungen für die automatische Identifizierung und Lokalisierung von Gegenständen verwendet. Bevorzugt ist vorgesehen, dass der RFID-Datenübertragungs-Mikrochip für die Datenübertragung nach ISO/IEC 14443 oder ISO/IEC 15693 ausgebildet ist.

Bei RFID Mikrochips gibt es verschiedene Betriebsmodi, nämlich den Peer-to-Peer-Modus (ISO 18092), den Reader/Writer-Modus (ISO 14443) und den Card-Emulation-Modus. Am häufigsten genützt wird der Reader-/Writer-Modus, der eine Kommunikation mit passiven RFID-Transpondern ermöglicht. Passive RFID-Transponder zeichnen sich dadurch aus, dass sie keine eigene Stromversorgung aufweisen, sondern dass sie die zur Kommunikation und zur Abarbeitung interner Prozesse benötigte Energie ausschließlich aus dem Feld der Schreib-/Leseeinheit beziehen. Beim Peer-to-Peer-Modus hingegen können sowohl der Sender als auch der Empfänger aktiv kommunizieren (ISO 18092, aktiver Modus). Im Rahmen der Erfindung ist bevorzugt, dass ein Peer-to-Peer-Modus des RFID Datenübertragungs-Mikrochips eingestellt ist.

Bei der kapazitiven Datenübertragung kann die Übertragung der Daten sowohl berührungslos als auch kontaktbehaftet erfolgen. Bei schließtechnischen Anwendungen ist es besonders vorteilhaft, wenn der Benutzer ein Identmedium bei sich trägt, das wenigstens eine kapazitive Koppelfläche aufweist, über welche die vom Identmedium generierten Signale auf die Körperoberfläche des Benutzers eingekoppelt werden. Zum Öffnen eines Schlosses einer Tür reicht es aus, wenn der Benutzer mit einem Körperteil, wie z.B. der Hand eine Koppelelektrode des Schlosses berührt oder sich an diese annähert, wodurch die vom Identmedium generierten Signale in die Zutrittskontrollvorrichtung des Schlosses eingekoppelt und dort ausgewertet werden. Im Datenübertragungsmodul des Senders werden die zu übertragenden Signale auf einen Träger aufmoduliert und im Datenübertragungsmodul des Empfängers werden die Signale wieder demoduliert. Der beschriebene Vorgang kann in äquivalenter Weise für die Datenübertragung vom Schluss an das Identmedium vorgesehen sein. Die Modulation des Trägers kann grundsätzlich in beliebiger Weise erfolgen. Bevorzugt ist in diesem Zusammenhang vorgesehen, dass der RFID-Datenübertragungs-Mikrochip einen Amplitudenmodulator/- demodulator oder eine Amplitudenumtastung umfasst. Weiters ist es bevorzugt, wenn der RFID-Datenübertragungs-Mikrochip für eine Datenübertragung in den ISM-Frequenzbändern, insbesondere in den Frequenzbändern von 13,553 bis 13,567 MHz, aber auch 6,765 - 6,795 MHz oder 26,957 - 27,283 MHz, ausgebildet ist.

Ein bevorzugtes Beispiel für RFID-Mikrochips, die vielfach erprobt und kostengünstig verfügbar sind, ist der Chip des Typs PN512 der Firma NXP B.V. oder TRF7970A der Firma Texas Instruments.

Bei den erfindungsgemäß vorgesehenen Rundfunk-Emfangschips handelt es sich beispielsweise um Mikrochips, wie sie in Mobiltelefonen oder Miniatur-Radios eingesetzt werden. Hierbei kann beispielsweise vorgesehen sein, dass der Rundfunk-Empfangschip für den Empfang über Ultrakurzwelle oder Kurzwelle ausgebildet ist. Als besonders geeignet hat sich ein Rundfunk-Empfangschip des Typs Si4734 der Firma Silicon Labs herausgestellt.

Eine bevorzugte Ausbildung sieht hierbei vor, dass der Rundfunk-Empfangschip einen AM-Demodulator für den Kurzwellenbereich umfasst.

Obwohl die vorliegende Erfindung nicht auf bestimmte Typen von schließtechnischen Vorrichtungen beschränkt ist, werden die Vorteile der Erfindung besonders deutlich bei einer bevorzugten Ausbildung, bei der die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem Sperrglied zum wahlweisen Freigeben oder Sperren des Zutritts zusammenwirkt. Als Schließeinrichtung ist zum Beispiel ein elektrisch betätigbares oder freigebbares Türschloss oder dgl. zu verstehen. In diesem Zusammenhang ist es besonders vorteilhaft, wenn die schließtechnische Komponente oder die weitere schließtechnische Komponente ein elektronisches Medium oder Gerät mit einem Speicher für Identifikations- oder Zutrittsrechtsdaten, insbesondere ein elektronisches Schlüsselmedium ist.

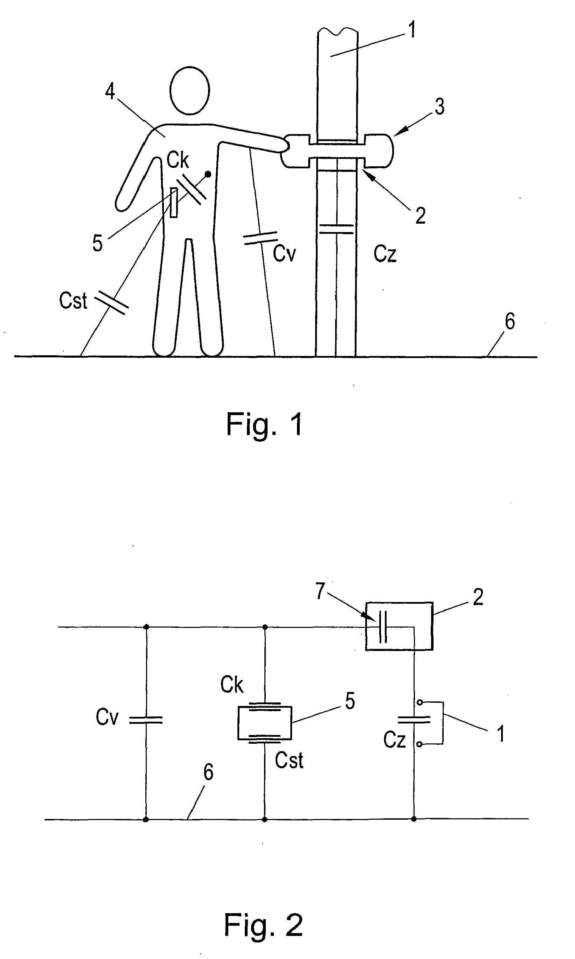

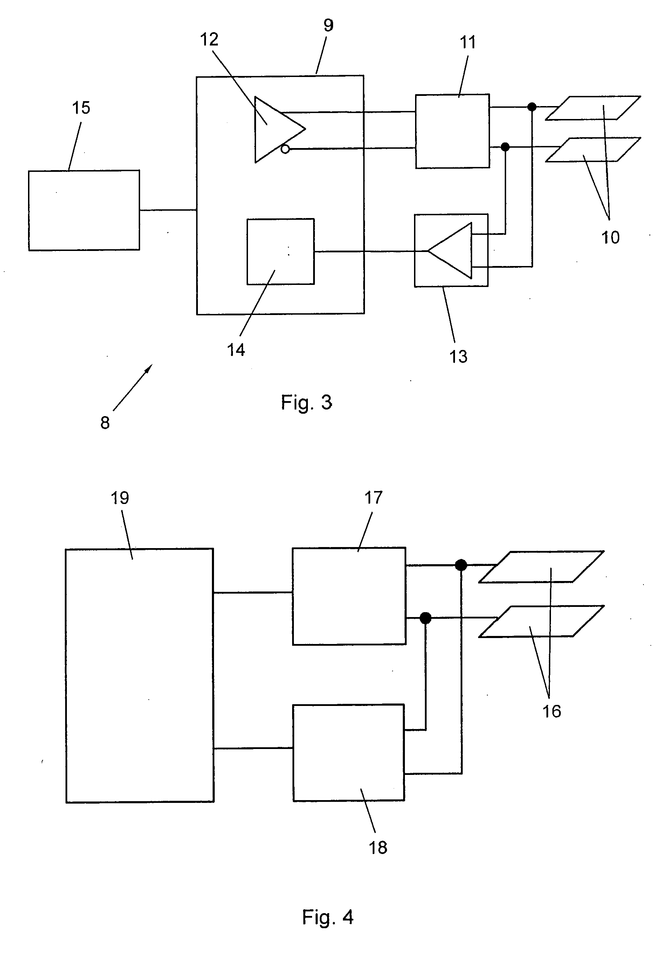

Die Erfindung wird nachfolgend anhand eines in der Zeichnung dargestellten Ausführungsbeispiels näher erläutert. In dieser zeigen Fig. 1 eine schematische Darstellung der Funktionsweise einer mit kapazitiver Kopplung arbeitenden Zutrittskontrollvorrichtung, Fig. 2 ein vereinfachtes Ersatzschaltbild der Ausbildung gemäß Fig. 1, Fig. 3 ein vereinfachtes Schaltbild eines Datenübertragungsmoduls der Zutrittskontrollvorrichtung mit einem RFID-Interface-Chip und zwei Koppelelektroden und Fig. 4 ein vereinfachtes Schaltbild eines Datenübertragungsmoduls der Zutrittskontrollvorrichtung mit einem Rundfunks-Empfangschip und zwei Koppelelektroden.

In Fig. 1 ist schematisch eine Tür mit einer die Tür öffnenden Person sowie die einzelnen Streu-, Verlust- und Koppelkapazitäten dargestellt. Die Tür ist mit 1 bezeichnet und weist eine Zutrittskontrollvorrichtung 2 mit einem als Knauf ausgebildeten Betätigungsglied 3 auf. Die Person 4 trägt einen elektronischen Schlüssel 5, welcher beispielsweise in einer Hosentasche eingesteckt sein kann. Der elektronische Schlüssel 5 erzeugt hierbei ein kapazitives Nahfeld mit einer Trägerfrequenz, auf welches Identifikationsdaten aufmoduliert werden. Das kapazitive Nahfeld wird auf die Körperoberfläche der Person 4 eingekoppelt und in der Folge an einen Empfänger der Zutrittskontrollvorrichtung 2 weitergeleitet. Dabei weist der elektronische Schlüssel 5 eine Streukapazität Cst gegen den Boden 6 auf. Am Übergang zwischen dem elektronischen Schlüssel 5 und der Person 4 ist eine Koppelkapazität Ck zu beobachten. Weiters tritt Verlustkapazität Cv zwischen der Person 4 und dem Boden 6 auf. Schließlich weist die Zutrittskontrollvorrichtung 2 bzw. deren Schließzylinder eine Zylinderkapazität Cz gegen den Boden auf.

Das entsprechende vereinfachte Ersatzschaltbild ist in Fig.2 dargestellt, wobei wiederum die beschriebenen Kapazitäten angeführt sind. Dabei bildet Cv alle Kapazitäten nach, welche elektrische Flüsse zur Folge haben, welche sich vom Sender nicht über den Empfangskondensator des Empfängers schließen, sondern an diesem vorbeigehen und somit nichts zur Koppelung zwischen Empfänger und Sender beitragen. Cst bildet die Kapazitäten nach, welche als Summe für die kapazitive Koppelung der Sendeelektrode gegen Boden zur Verfügung steht. Ck bildet die Kapazitäten nach, welche als Summe für die kapazitive Koppelung der Person 4 zur zweiten Elektrode zur Verfügung steht. Cz bildet die Kapazitäten nach, welche als Summe für die kapazitive Koppelung von der Zutrittskontrollvorrichtung bzw. deren Schließzylinder zum Boden zur Verfügung steht. Dabei ist in Fig. 2 die Zutrittskontrollvorrichtung wiederum mit 2 bezeichnet und weist einen Empfangskondensator 7 auf. Die Auslegung des Empfangskondensators 7 ist derart zu treffen, dass sich über den Empfangskondensator einerseits ein ausreichender elektrischer Fluss schließt und dass andererseits die Spannung am Kondensator nicht zu klein wird. Ist die Kapazität des Empfangskondensators zu klein, so schließt sich zu wenig elektrischer Fluss über diesen. Allerdings ist auch eine zu große Kapazität des Empfangskondensators in der Art störend, dass die auszuwertende Spannung am Kondensator u=q/c ungünstig klein wird.

Fig. 3 zeigt ein vereinfachtes Schaltbild eines Datenübertragungsmoduls 8 der Zutrittskontrollvorrichtung 2 mit einem RFID-Interface-Chip 9 und zwei Koppelelektroden 10. Die Koppelelektroden 10 sind über eine Anpassschaltung 11 mit dem Sendeteil 12 des RFID-Interface-Chips 9 und über einen Empfangsverstärker 13 mit dem Empfangsteil 14 des RFID-Interface-Chips 9 verbunden. Die OP-Verstärkerschaltung 13 ist bevorzugt mit hohem Eingangswiderstand realisiert. Die kryptographische Behandlung sowohl der Sende- als auch der Empfangsdaten erfolgt im RFID-Interface-Chip 9, mit dessen Hardware auch die Demodulation des Empfangsdatensignals realisiert ist. Der Mikrokontroller 15 steuert die verschiedenen Funktionen des RFID-Interface-Chips 9.

Bei der Ausbildung gemäß Fig. 4 sind die Koppelelektroden 16 an eine Anpassschaltung 17 und einen Rundfunk-Empfangschip 18 angeschlossen. Hier wird die kryptographische Behandlung der Sende- und Empfangsdaten an den Mikrokontroller 19 delegiert, während Signalempfang und Demodulation vom Rundfunks-Empfangschip 18 im (bei der Initialisierung eingestellten) Kurzwellen-AM-Modus übernommen werden.

## Patentansprüche

1. Zutrittskontrollvorrichtung umfassend wenigstens eine schließtechnische Komponente mit einer Sende-/Empfangseinrichtung, um eine Datenübermittlung zwischen der schließtechnischen Komponente und einer weiteren schließtechnischen Komponente zu ermöglichen, wobei die Sende-/Empfangseinrichtung ein wenigstens eine Koppelelektrode aufweisendes kapazitives Datenübertragungsmodul aufweist, sodass die Datenübermittlung über eine kapazitive Kopplung zwischen der schließtechnischen Komponente und der weiteren schließtechnischen Komponente erfolgen kann, **dadurch gekennzeichnet, dass** das kapazitive Datenübertragungsmodul (8) einen für die induktive Datenübertragung ausgebildeten RFID Datenübertragungs-Mikrochip (9) oder einen Rundfunkempfangs-Mikrochip (18) umfasst, an dessen Antennenanschluss die wenigstens eine Koppelelektrode (10,16) angeschlossen ist.

2. Zutrittskontrollvorrichtung nach Anspruch 1, **dadurch gekennzeichnet, dass** der RFID Datenübertragungs-Mikrochip (9) für die Datenübertragung nach ISO/IEC 14443 oder ISO/IEC 15693 ausgebildet ist.

3. Zutrittskontrollvorrichtung nach Anspruch 1 oder 2, **dadurch gekennzeichnet, dass** ein Peer-to-Peer-Modus des RFID Datenübertragungs-Mikrochips (9) eingestellt ist.

4. Zutrittskontrollvorrichtung nach Anspruch 1, 2 oder 3, **dadurch gekennzeichnet, dass** der RFID Datenübertragungs-Mikrochip (9) einen Amplitudenmodulator/-demodulator oder eine Amplitudenumtastung umfasst.

5. Zutrittskontrollvorrichtung nach einem der Ansprüche 1 bis 4, **dadurch gekennzeichnet, dass** der RFID Datenübertragungs-Mikrochip (9) für eine Datenübertragung in den ISM-Frequenzbändern, insbesondere in den Frequenzbändern 13,56 MHz, 6,78 MHz oder 27,12 MHz ausgebildet ist.

6. Zutrittskontrollvorrichtung nach einem der Ansprüche 1 bis 5, **dadurch gekennzeichnet, dass** der RFID Datenübertragungs-Mikrochip (9) ein Chip des Typs PN512 der Firma NXP B.V. oder TRF7970A der Firma Texas Instruments ist.

7. Zutrittskontrollvorrichtung nach Anspruch 1, **dadurch gekennzeichnet, dass** der Rundfunk-Empfangschip (18) für den Empfang über Ultrakurzwelle oder Kurzwelle ausgebildet ist.

8. Zutrittskontrollvorrichtung nach Anspruch 7, **dadurch gekennzeichnet, dass** der Rundfunk-Empfangschip (18) ein Chip des Typs Si4734 der Firma Silicon Labs ist.

9. Zutrittskontrollvorrichtung nach Anspruch 7 oder 8, **dadurch gekennzeichnet, dass** der Rundfunk-Empfangschip (18) einen Ampitudendemodulator umfasst.

10. Zutrittskontrollvorrichtung nach einem der Ansprüche 1 bis 9, **dadurch gekennzeichnet, dass** die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem Sperrglied zum wahlweisen Freigeben oder Sperren des Zutritts zusammenwirkt.

11. Zutrittskontrollvorrichtung nach einem der Ansprüche 1 bis 10, **dadurch gekennzeichnet, dass** die schließtechnische Komponente oder die weitere schließtechnische Komponente ein elektronisches Medium oder Gerät mit einem Speicher für Identifikations- oder Zutrittsrechtsdaten ist.
